# EUROPEAN PATENT SPECIFICATION

(11) **EP 1 197 270 B1**
(45) Date of publication and mention of the grant of the patent: **02.06.2010**
(21) Application number: 01906153.0
(22) Date of filing: 21.02.2001
(51) Int. Cl.: B09B 3/00, B01D 53/86, G01N 27/04, F23C 10/22, F23G 5/027, F23G 5/14, F23G 5/30, F23G 7/14, F23G 7/06, B09C 1/06

(54) **METHOD AND DEVICE FOR PROCESSING WASTE**
VERFAHREN UND VORRICHTUNG ZUM VERARBEITEN VON ABFALL
PROCEDE ET DISPOSITIF DE TRAITEMENT DE DECHETS

(30) Priority: 23.02.2000 JP 2000052144; 10.05.2000 JP 2000137212; 20.11.2000 JP 2000352179
(43) Date of publication of application: 17.04.2002
(73) Proprietor: JFE Engineering Corporation, Tokyo (JP)
(72) Inventor: Shiomitsu, Toru NKK Corporation, Tokyo 100-0005 (JP); Hirayama, Atsushi NKK Corporation, Tokyo 100-0005 (JP); Iwasaki, Toshihiko NKK Corporation, Tokyo 100-0005 (JP); Akiyama, Hajime NKK Corporation, Tokyo 100-0005 (JP); Ayukawa, Susumu NKK Corporation, Tokyo 100-0005 (JP); Akashi, Tetsuo NKK Corporation, Tokyo 100-0005 (JP)
(74) Representative: HOFFMANN EITLE
(86) International application number: PCT/JP2001/001234
(87) International publication number: WO 2001/062403

(56) References cited:
- EP-A- 1 048 366
- DE-A- 3 644 381
- JP-A- 1 046 575
- JP-A- 4 110 768
- JP-A- 4 503 400
- JP-A- 6 174 217
- JP-A- 11 253 909
- JP-A- 51 045 475
- JP-A- 58 024 710
- JP-Y2- 3 018 820
- US-A- 3 509 835
- US-A- 5 387 734
- US-A- 5 456 881
- US-A- 5 735 224

## Description

### FIELD OF THE INVENTION

The present invention relates to a treatment method of waste, more particularly a method of treating waste of inorganic components being main containing harmful organic matters and an apparatus thereof.

### BACKGROUND OF THE INVENTION

In waste mainly of inorganic matter such as incinerator residue exhausted from waste incinerating plants, contaminated soils and absorption treated residue, a halogen compound such as dioxins harmful to a human body is contained. A treatment has, therefore, been carried out to eliminate harmful matters from waste for making waste harmless. Herein, the incinerator residue is generally meant by bottom ash directly exhausted from a combustion chamber of the incinerating plant and fly ash contained in exhaust gas from an incinerator.

A treatment method for making the incinerator residue harmless has been proposed, for example, in the Patent Specification Laid Open 8-303741 wherein a method is disclosed to heat or roast incinerator residue contaminated with dioxins to change the same into gas, which is then brought into contact with a catalyst on a fixed bed, and is heated under the presence of oxygen and water, thereby to decompose dioxins. In the Patent Specification Laid Open 4-243077, a method is proposed to heat incinerator residue under the presence of lime. Further, in the Patent Specification Laid Open 64-500330, a method is proposed to heat fly ash under shortage of oxygen.

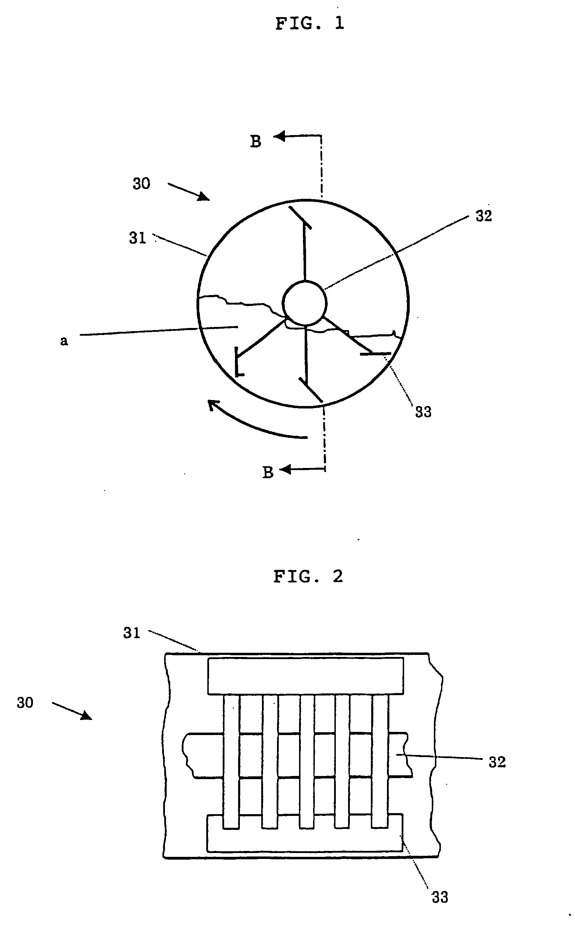

Figs. 1 and 2 show one example of cylindrical heaters, which is used to heat incinerator residue in the methods as disclosed in the Patent Specification Laid Open 8-303741, the Patent Specification Laid Open 4-243077 and the Patent Specification Laid Open 64-500330. Fig. 1 is a cross sectional view of a cylindrical heater vertically in an axial direction thereof. Fig. 2 is a cross sectional view taken along the line B-B of Fig. 1.

The cylindrical heater 30 comprises a cylindrical body 31 which is provided therein with a central cylindrical shaft 32 extending in the axial direction thereof. The central shaft 32 has a plurality of paddle wings 33 for stirring, mixing, and transporting the introduced incinerator residue a into the body 31 axially thereof with a predetermined space and removing matters adhered to the inner surface of the body 31. In the cylindrical heater 30, the incinerator residue a is introduced into the body 31 while the body 31 is heated and rotated. The incinerator residue a is transported to an exhausting opening (leftward direction in the drawing) while being heated, stirred and mixed by the paddle wings 33.

However, in the cylindrical heater 30, a heat transfer from the heating wall of the body 31 to the incinerator residue a is not always effective, and it is necessary to excessively raise the temperature of the heating wall when the incinerator residue is heated up till temperatures for eliminating dioxin from the incinerator residue. Such excessive heating will not only increase an energy required for heating to increase treating cost, but also cause a trouble that the incinerator residue is firmly adhered to the inside of the heater by the excessively raised temperature. Moreover, with fixation of the incinerator residue, the heat transfer effect is more worsened. For removing the adhered matters, the paddle wings may be provided with a scraping function. However, a strong force is required to scrape the adhered matters, and there occur various problems that the paddles will be damaged or easily worn out, and further, high torque will be required to drive the paddles.

In these conventional methods, the oxidation-decomposition of dioxin is not always completed, and all of organic compounds that may have the potential to produce dioxin are not always decomposed. It is, therefore, required to provide a facility for abruptly cooling incinerator residue after heat-treating, thereby to prevent formation of dioxin. A problem occurs in a facility cost.

Further, JP 51-045475 A discloses a method for liquefying municipal waste. For this, a container is provided that is partially filled with a heating medium which is preferably sand. This sand is fluidized by air, and merely agitated by means of a rotating paddle-like structure.

Still further, US 5,735,224 A relates to the decomposition of dioxins.

### DISCLOSURE OF THE INVENTION

It is accordingly an object of the invention to provide a treatment method of waste, more in detail a treatment method of waste and an apparatus thereof for easily and securely making harmless harmful organic matters contained in waste mainly of inorganic matters.

The object may be attained by the treatment method of waste according to claim 1. Prefered embodiments are defined in the dependent claims.

Further, the treatment method is realized by an apparatus according to claim 4.

### BRIEF DESCRIPTION OF THE DRAWINGS

Fig. 1 is a schematic view of a conventional cylindrical heater of waste;
Fig. 2 is a sectional view taken along the line B-B of Fig. 1;
Fig. 3 is an example of a waste treatment apparatus of the invention;
Fig. 4 is a process flow of a waste treatment method of the invention;
Fig. 5 is a diagram showing timings of throwing and exhausting waste;
Fig. 6 is a diagram showing positions of locating a differential pressure gauge, thermocouples, and microwave sensors;
Fig. 7 is a view showing variations of differential pressure between a gas blowing opening and an upper part of the fluidized layer;
Figs. 8 to 10 are views showing temperature variations of thermocouples provided in the cylindrical-vertical type heating container;
Fig. 11 is a view showing signal variations of microwave sensors provided in the cylindrical-vertical type heating container;
Fig. 12 is an example for measuring the amount of total hydrocarbon contained in the exhaust gas by use of a FID;
Fig. 13 is a view showing the relationship between the FID peak accumulated values and the amount of dioxins; and
Fig. 14 is a view showing the relationship between the time required for volatilization and the amount of dioxins.

### EMBODIMENTS OF THE INVENTION

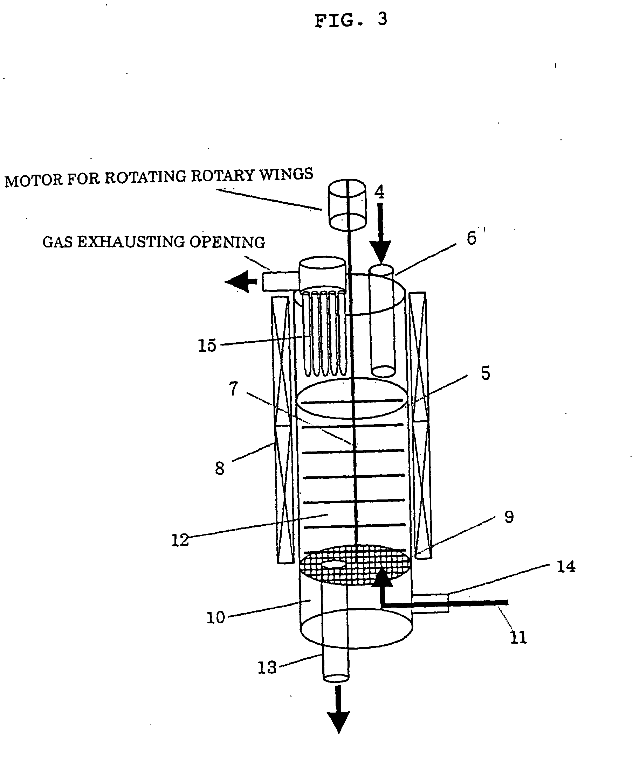

Fig. 3 schematically shows an example of a waste treatment container of the invention.

Fly ash 4 collected by a dust collector such as a bag filter of a garbage incinerating plant is thrown into a cylindrical-vertical type heating container 5 from a throwing opening 6 thereof.

The thrown fly ash 4 is stirred by gas 11 and rotary wings 7 to form a fluidized layer 12, the gas 11 being heated up to 350 to 480 ºC and blown into the cylindrical-vertical type heating container 5 from a gas blowing opening 14 provided at the bottom thereof via a wind box 10 and a dispersing plate 9, and the rotary wings 7 being provided in the cylindrical-vertical type heating container 5 and rotated at a speed of about 1 to 200 rpm. The fluidized layer 12 of fly ash 4 is heated to 350 to 450 °C by the heated gas 11 and an auxiliary electric heater 8 provided at an outer periphery of the cylindrical-vertical type heating container 5.

In this case, since the fly ash 4 is stirred and formed into the fluidized layer 12 by the blowing gas 11 and the rotary wings 7, an exchange speed in the cylindrical-vertical type heating container 5, for example, between a central part and a peripheral part thereof may be fast. Therefore, a very high heat transfer coefficient may be obtained and the fly ash 4 may be uniformly and efficiently heated. As a result, the harmful matter such as dioxins contained in the fly ash 4 may be volatilized and securely made harmless. The fly ash 4 thus made harmless is exhausted via an exhausting opening 13 and is separated from the exhaust gas at a dust remover 15.

If the waste is thrown into from the neighborhood of the surface of the fluidized layer already formed, it is possible to effectively prevent the lowering of gas temperature around the dust remover located above the upper part of the fluidized layer in the heater, and then to increase the volatilizing efficiency of the harmful matters such as dioxins. As a result, not only the removing efficiency of the harmful matters such as dioxins is increased, but also the energy required for the heating treatment and the blowing gas for promoting the volatilization of harmful matters may be decreased.

For throwing the waste and exhausting the heat treated waste, if using pressure variations between the gas blowing opening and the upper part of fluidized layer, temperature variations in the cylindrical-vertical type heating container, or level variations measured by a level gauge such as a rotary type, a micro wave utilizing type, a sound wave utilizing type or an infrared ray utilizing type which is provided in the cylindrical-vertical type heating container, it is possible to correctly control the throwing and exhausting the amount of the waste. Further, thereby, the retention time or the amount of the waste in the heater can be correctly controlled. Accordingly, the heat treatment of the waste may be made more correctly, and a more excellent removing efficiency of harmful organic matters such as dioxins may be obtained.

In case a time lag is provided between a time of throwing the waste and a time of discharging the heat treated waste, in comparison with a case of throwing the waste at a constant rate and consecutively, it is possible to suppress a phenomenon of short-cut that the thrown waste does not pass a fixed retention time and is exhausted in a time shorter than the fixed time. Thus, the retention time of the waste in the heater which is required to remove the harmful matters such as dioxins may be secured more correctly. Therefore, more excellent removing efficiency of harmful organic matters such as dioxins may be obtained.

According to the method of the invention, for making harmless the volatilized harmful organic matters, a fluidized layer type catalyst or a moving layer type catalyst may be employed. In case of making harmless the harmful organic matters by using the catalyst, in comparison with a case that the harmful organic matters are not separated from the waste, a contacting efficiency between the harmful organic matters and the catalyst may be enhanced. Especially in the case of carrying out the treatment by means of the fluidized layer type catalyst or the moving layer type catalyst, in comparison with a case of carrying out the treatment with the fixed bed catalyst, the contacting efficiency with the catalyst may be enhanced. Namely, also in case a catalyst of fine particles is used, which may maintain the high contacting efficiency with the harmful organic matters contained in the exhaust gas, the increase of pressure loss due to choking by the dusts going into the catalyst layer together with the exhaust gas may be avoided by use of the fluidized layer type or the moving layer type. Therefore, the higher decomposition efficiency of the harmful matters such as dioxins may be obtained. Further, since the contacting efficiency is high, a required amount of the catalyst may be decreased, the waste may be treated harmless at a lower cost thereby.

If treating the gas exhausted after the heat treatment with an organic matter oxidizing and decomposing catalyst containing a noble metal, in comparison with a case of using a catalyst having an oxide based catalytic activity ingredient, the harmful organic matters of dioxins may be completely oxidized and decomposed because of having a higher oxidation decomposing ability. Further, since a dioxin-associated matters causing formation of dioxin and other organic compounds may be effectively and completely oxidized and decomposed, the formation of dioxin in the exhaust gas after treatment may be prevented.

According to the method of the invention, the high temperature burning decomposition method may be adapted to the treatment of making harmless the volatilized harmful organic matters. If using the burning decomposition method, in comparison with the case that the harmful organic matters are not volatilized from the waste, the amount of oxygen required for burning may be decreased. Therefore, also in a case of using air as an oxygen source, the treatment of making harmless may be performed without producing a large amount of the exhausted gas and NOx. Further, it is possible to employ a method of blowing gas containing harmful organic matters exhausted after the heat treatment into a high temperature part of an incinerator or a fusing furnace for decomposing them. In this method, if a waste treating apparatus of the invention is located in the neighborhood of an incinerator or a fusing facility which produces incinerator residue, the waste may be treated to be harmless at a lower cost without independently providing a heating device or the like required for burning decomposition.

According to a method of the invention, if the amount of total hydrocarbon in the gas containing the volatilized harmful organic matters is measured before and/or after making harmless the harmful organic matter, the treating condition may be monitored on the basis of the measured results. If carrying out the treatments of volatilizing various organic compounds such as dioxin and other harmful organic matters from waste, moving them into exhausted gas, and making constant the amount of throwing waste into and exhausting from the heater, the temperatures in the heater, the amount of the blowing gas and so on, then the amount of total hydrocarbon in the exhaust gas is almost kept constant. On the other hand, in case any one of the treating conditions is off from the predetermined conditions, the amount of total hydrocarbon in the exhaust gas is varied. It is, therefore, possible to not only monitor the treating conditions on the basis of the measurement of the amount of total hydrocarbon in the exhaust gas, but also control at least one of the treating conditions. It is preferable that the measurement is continuously carried out.

Further, if the amount of total hydrocarbon in the exhaust gas is continuously measured after the catalyst treatment, in case the exhaust gas is introduced under a proper treating condition, the organic matters are completely oxidized and decomposed, and the amount of total hydrocarbon at the catalyst outlet becomes almost 0. However, if the catalytic conditions such as the treating temperature or the amount of the exhaust gas are varied, the amount of total hydrocarbon is accordingly varied at the catalytic outlet. It is, therefore, possible to control at least one of the treating conditions in addition to monitoring the oxidation and decomposition condition of the organic matters by catalyst on the basis of the measured result. It is also preferable that the measurement is continuously carried out.

In case a hydrogen frame ionization detector (FID) is provided in the apparatus of Fig. 3 for analyzing the gas exhausted after the heat treatment, the treatment may be practiced while monitoring the amount of harmful matters of dioxins. It is possible to control the amount of throwing waste, the amount of blowing gas, the temperature of gas, the heating temperature and so on efficiently without waiting for analyzed results for which a long time has been taken in the prior art.

With the FID, by analyzing the total amount of total hydrocarbon volatilized from waste or the time to be taken until the volatilization of total hydrocarbon is completed, it is possible to quantify at least one sort of the harmful organic matters contained in the waste before or after heating treatment. It is, therefore, possible to detect the amount of harmful organic matters such as dioxins in a short time and to treat the waste while monitoring the detected results, and a harmless degree of waste under treating may be known at a real time.

Further, with respect to a certain plurality of wastes, by means of the total volatilization amount of total hydrocarbon, otherwise the time to be taken until completion of volatilization of total hydrocarbon, and the amount of at least one sort of harmful organic matters, which have been sought by the above mentioned method, and by means of the total volatilization amount of total hydrocarbon of another waste unknown as to the content of the harmful organic matters, at least one sort of harmful organic matter contained in the another waste may be quantified. According to this method, the amount of harmful organic matters such as dioxins may be detected in a short time and with a higher precision than the quantifying method of the harmful organic matters by use of the FID and may treat the waste while monitoring the detected result. Thus the harmless degree of harmful matters may be known while the waste is treated.

The fluidized layer may be also formed, besides by blowing gas and stirring the waste, by vibrating the cylindrical-vertical type heating container or by vibrating the waste by supersonic waves.

For heating the fluidized layer of waste from the outside of the cylindrical-vertical type heating container, besides the heater, the retaining heat of incinerated exhaust gas from a garbage incinerating plant may be utilized. In order to more efficiently heat the fluidized layer of waste, a heater may be provided on the rotary wings or the rotating shaft.

The rotary wings may be formed with stirring arms having rake-like wings, but in case of the waste of low fluidity, fixing bars may be provided between the rotary wings to prevent the decrease of stirring efficiency.

### Example 1

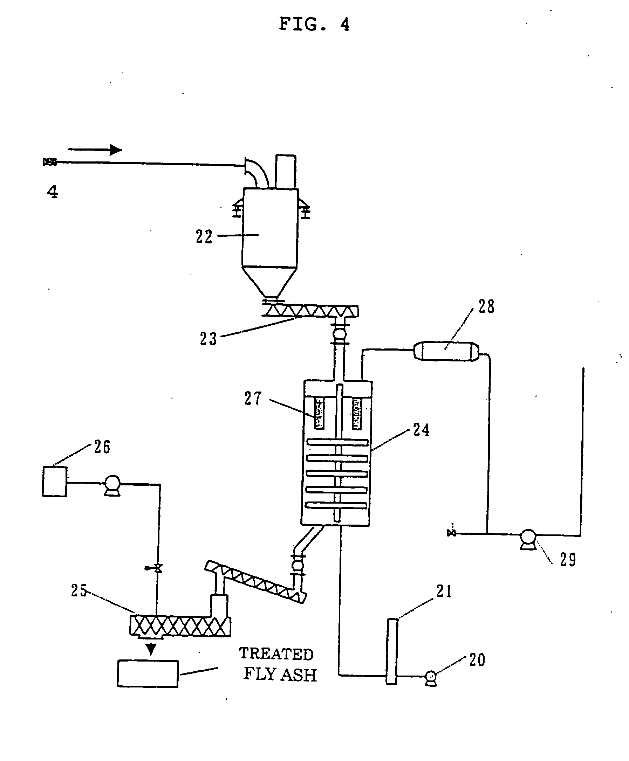

Fig. 4 shows a process flow of a waste treatment method of the invention.

Fly ash is continuously transported from a fly ash storing vessel 22 by a conveyer 23, and thrown into a cylindrical-vertical type heating container 24. The fly ash is, after the heat treatment, added with a heavy metal stabilizer 26 at a fly ash mixer 25 where a treatment is practiced to prevent the heavy metal from eluting. The gas coming out of the heater is, after removing dusts at a bag filter 27, introduced into a catalyst reactor 28 where the organic matters containing dioxins are oxidized and decomposed. Here, reference numeral 20 denotes an air blowing fan, 21 denotes a heater for heating a blown air, and 29 denotes an air attracting blower.

Table 1 shows the test conditions. Table 2 shows the catalytic conditions with platinum being used as a noble metal catalyst and with cordierite used as a carrier of catalyst. The analysis of dioxins was carried out at the positions ① to ⑥ as shown in Fig. 4.

Table 3 shows the analyzed results of dioxins in the fly ash.

At the outlet of the heater, the amount of dioxins is reduced to 0.0044 ng-TEQ/g. Further, although there was no rapid cooling process after the outlet of the heater, the formation of dioxins was scarcely seen on the way to the outlet of the fly ash stabilizing treatment process.

Table 4 shows the analyzed results of dioxins in the exhaust gas.

Although a large amount of dioxins of 100.9 ng-TEQ/m³N was contained in the gas at the outlet of the bag filter, the amount is reduced to 0.0321 ng-TEQ/m³N at the outlet of the catalyst reactor.

**Table 1**

| Item | Unit | Set values |
|---|---|---|
| Amount of treating fly ash | Kg/h | 60 |
| Amount of blowing air | m³N/h | 20 |
| Temperature of heater | °C | 450 |
| Temperature of fluidized layer | °C | 420 |
| Temperature of catalyst | °C | 400 |

**Table 2**

| Item | Set values |
|---|---|
| Number of catalyst | 80 |
| Carrier of catalyst | Cordierite |
| Amount of catalyst [m³] | 0.01 |
| Space velocity [h⁻¹] | 2000 |

**Table 3**

| Analyzing positions | | Dioxins |
|---|---|---|
| | | ng-TEQ/g |
| ① | Store outlet | 0.609 |
| ② | Heater outlet | 0.0044 |
| ③ | After stabilization . | 0.0154 |

**Table 4**

| Analyzing positions | | Amount of dioxins |
|---|---|---|
| | | ng-TEQ/g |
| ④ | Bag filter | 100.9 |
| ④ | Catalyst outlet | 0.0321 |

### Example 2

While the fly ash was heated to 420ºC, the dioxin removing rate was searched using the waste treatment apparatus shown in Fig. 3, where the fly ash containing dioxin was thrown into from the top of cylindrical-vertical type heating container, and from the neighborhood of the surface of fluidized layer.

Table 5 shows the dioxin removing rates.

It is seen that the dioxin removing rate is higher in case the waste is thrown into from the neighborhood of the surface of fluidized layer.

**Table 5**

| Throwing position of fly ash | Temperature of fly ash (°C) | Temperature around dust remover (°C) | Removing rate of DXN (%) |
|---|---|---|---|
| Top of heating container | 420 | 395 | 87 |
| Near surface of fluidized layer | 420 | 418 | 99.5 |

### Example 3

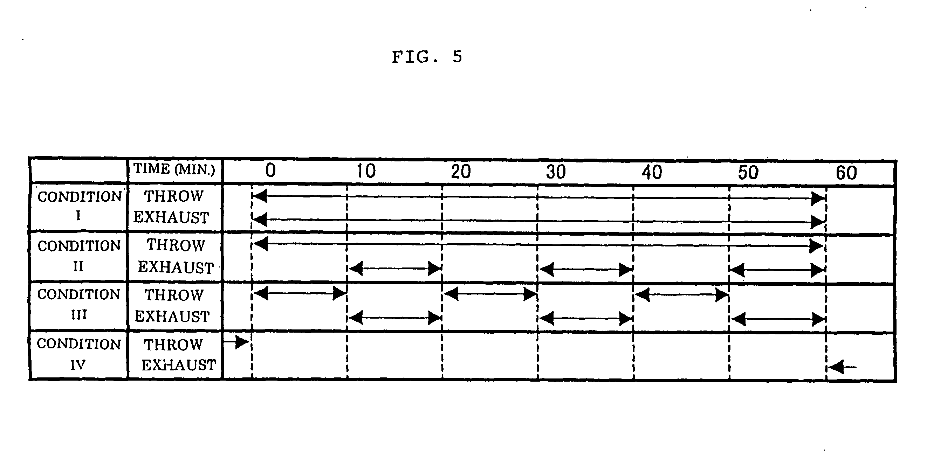

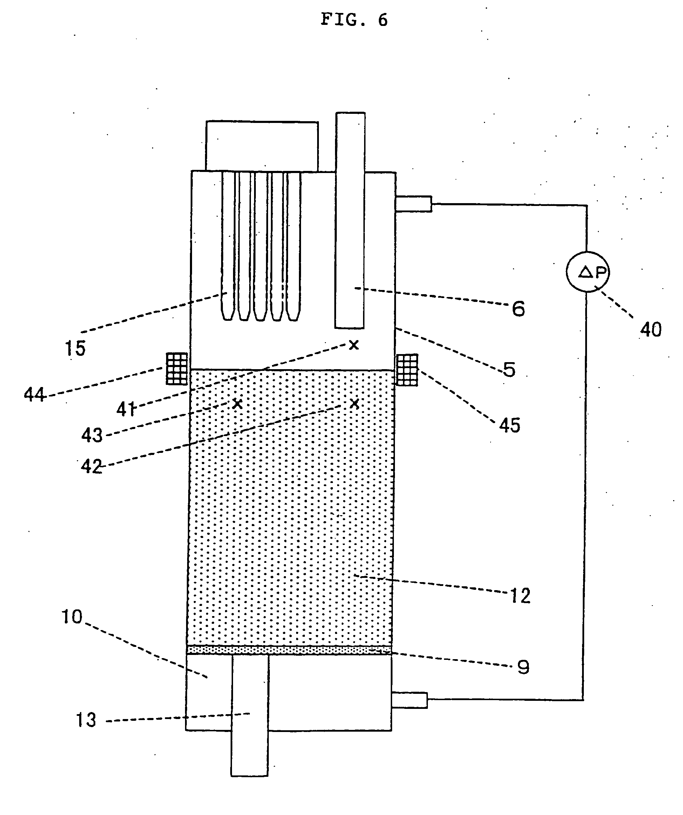

The dioxin removing rate was searched under the conditions of Table 1 through the process of the example 1 by changing timings of throwing and exhausting the waste under the conditions I to IV as shown in Fig. 5. Fig. 6 shows the positions of newly provided a differential pressure gauge 40, a thermocouple A41, another thermocouple B42, a further thermocouple C43, a signal generating part 44 and a signal receiving part 45 of the microwave sensor.

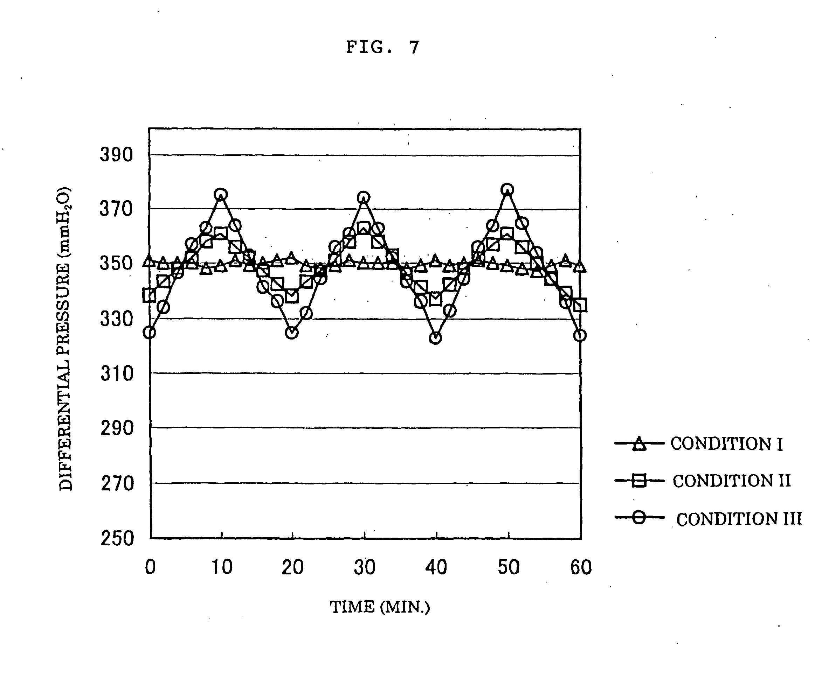

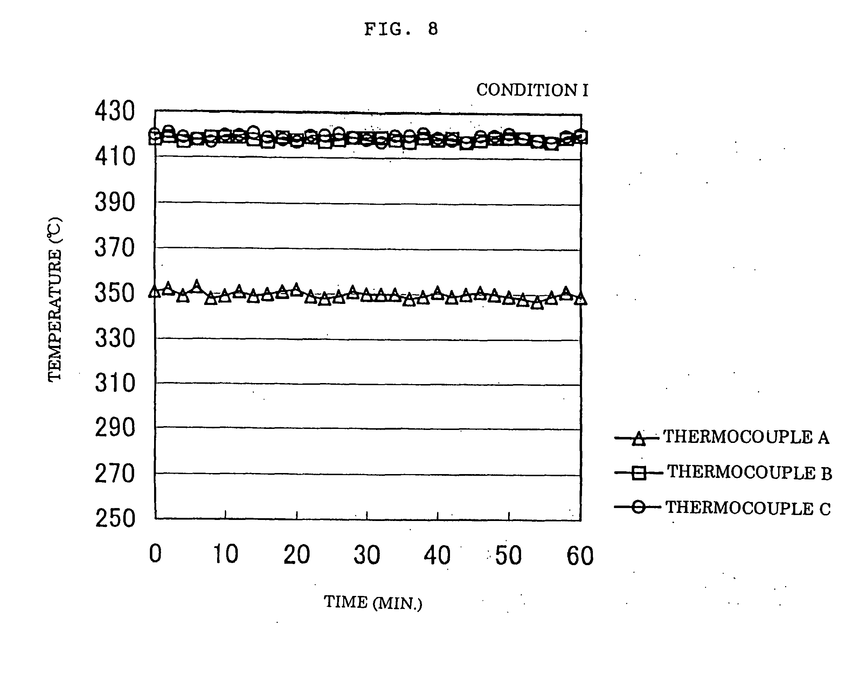

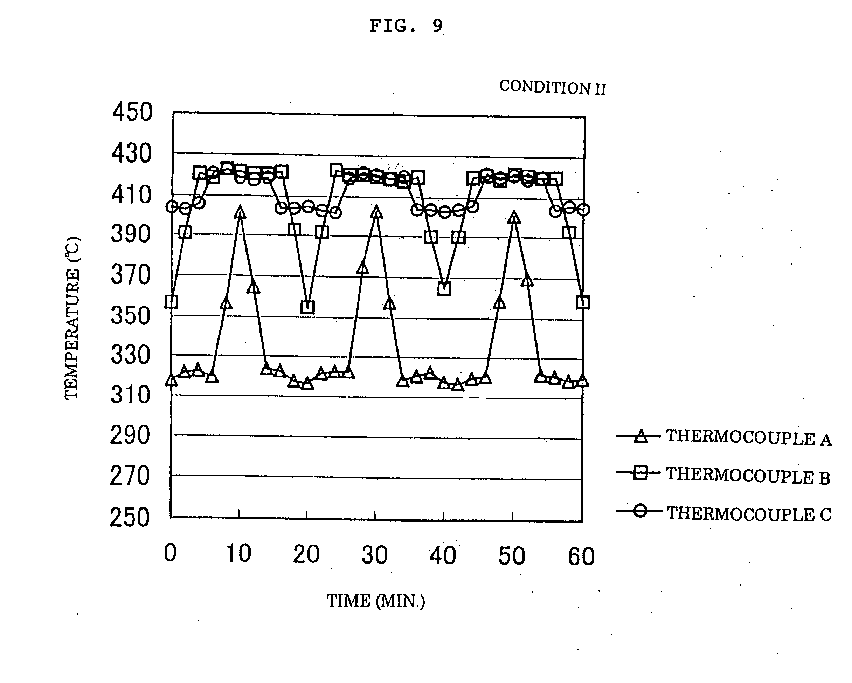

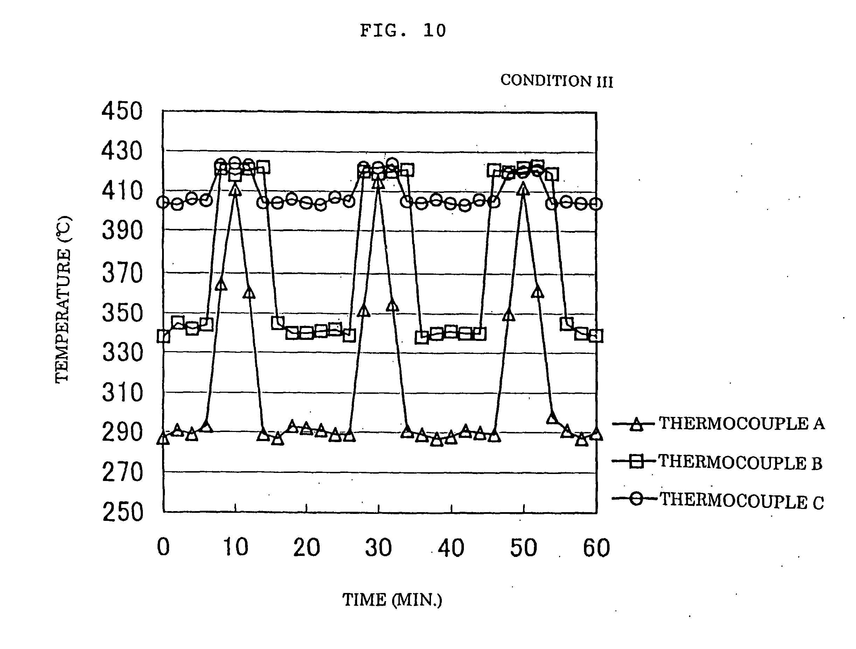

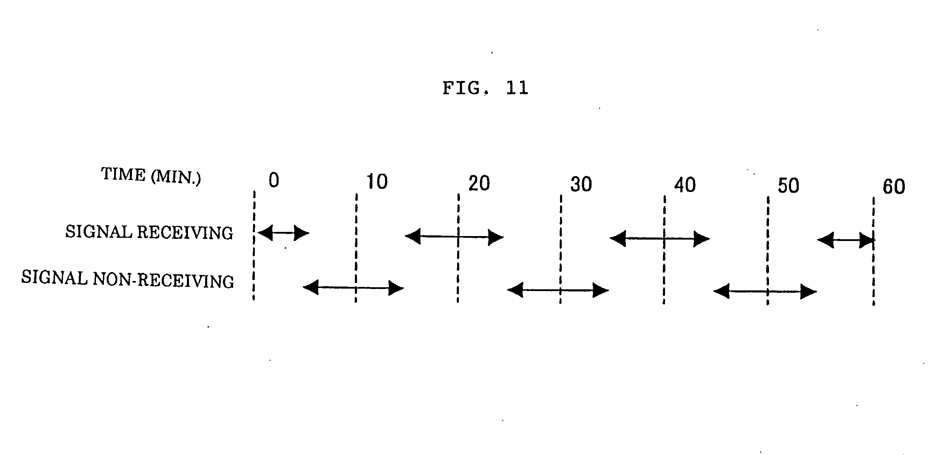

As a result, obtained were variations of the differential pressure shown in Fig. 7, temperature variations of thermocouples shown in Figs. 8 to 10, and signal variations of the microwave sensor shown in Fig. 11. According to these results, since the level of fluidized layer sensitively react on these three parameters, it is seen that these parameters may be used for controlling the level of fluidized layer.

Table 6 shows the dioxin removing rates.

It is seen that the highest dioxin removing rate is obtained under the condition IV of a batch treatment where the waste is not simultaneously thrown into and exhausted out, and the lowest dioxin removing rate is obtained under the condition I where the waste is always continuously thrown into and exhausted out. Under the conditions II and III where a time lag is provided in throwing and exhausting, the dioxin removing rates are intermediate between the conditions I and IV. As to the conditions II and III, a higher dioxin removing rate is obtained in the case of condition III where the waste is never simultaneously thrown into and exhausted out.

**Table 6**

| Conditions | I | II | III | IV |
|---|---|---|---|---|
| Removing rate of DXN (%) | 95 | 97 | 99 | 99.9 |

### Example 4

The amount of total hydrocarbon was measured by use of the FID in the process of the example 1 and under the same conditions as those of Table 1 except the temperature of the fluidized layer, while the incinerated fly ash is treated. The temperatures of the fluidized layer were 300°C in one case and 400°C in another case.

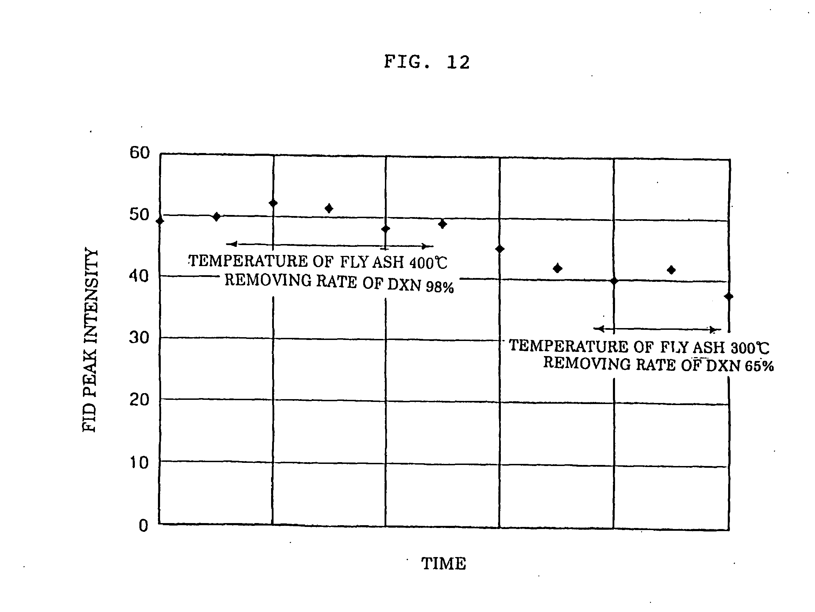

Fig. 12 shows the amount of total hydrocarbon contained in the exhaust gas by use of the FID.

When the FID peak intensity is about 50, the temperature of the fly ash in the volatilizing vessel is 400 °C and the removing rate of dioxins is 98%.

On the other hand, when the FID peak intensity is about 40, the temperature of the fly ash in the volatilizing vessel is 350°C and the removing rate of dioxins is 65 %.

Thus, since the FID peak intensity is closely related to the temperature of the fly ash in the volatilizing vessel and to the removing rate of dioxins, a high removing rate of dioxins may be maintained by controlling the temperature of fly ash on the basis of analyzed results of the exhaust gas by use of the FID.

If the measurement is continuously carried out, a response may be quickly taken to a change in removing rate of harmful organic matters in the waste, thereby the waste may be treated always under the optimum conditions.

### Example 5

With preparation of a plurality of sorts of fly ashes, the amount of dioxins was measured as to each ash by making in order a pretreatment with use of acid, an extraction treatment with use of organic solvent, a concentration treatment and an analysis with use of GC-MS. On the other hand, with preparation of the same sorts of fly ashes, and with volatilization of the organic compounds by heating 2.0 g of respective ash up to 400°C while an air is circulated at a constant amount, the gas containing the volatilized organic compounds was analyzed.

The data obtained by the FID is given as a change of voltage relative to a time, and the voltage corresponds to the amount or the volatilization amount of volatilized organic compounds. Namely, the accumulated value (FID peak accumulated value) obtained by a time integration of the voltage obtained by the FID corresponds to the total volatilization amount of organic compounds, and the time from the beginning of volatilization to the time when the voltage becomes zero corresponds to a time taken until the volatilization of the organic compounds has been completed.

Therefore, as to these fly ashes, the relation between the FID peak accumulated value and the amount of dioxins and the relation between the volatilization required time and the amount of dioxins were sought.

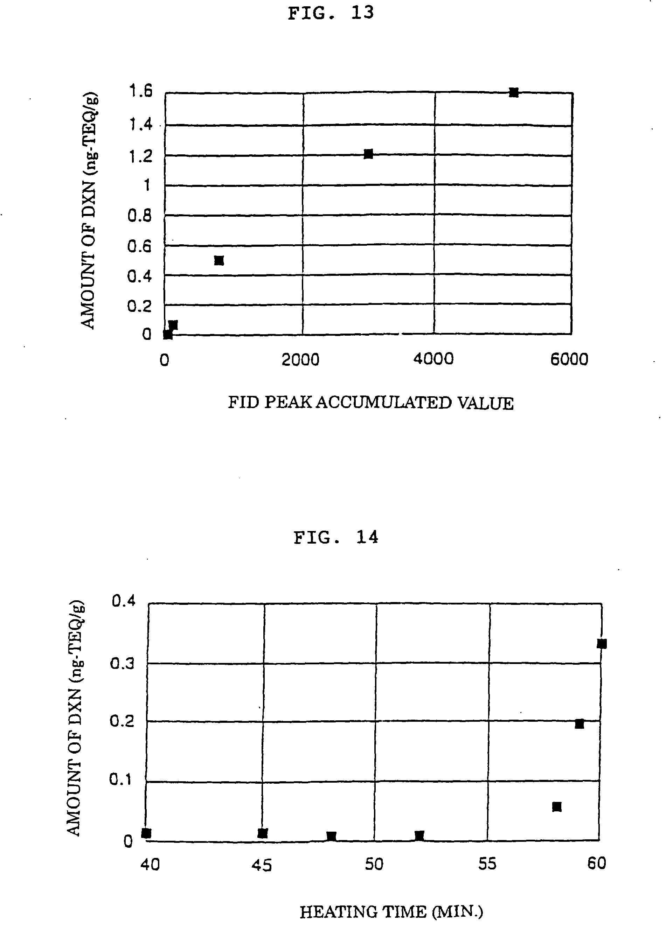

The results are shown in Figs. 13 and 14.

It may be seen that the FID peak accumulated value or the amount of dioxins and the volatilization required time are clearly related to each other.

Next, with preparation of an ash which is unknown as to the amount of dioxins, the FID peak accumulated value and the volatilization required time were sought also under the same conditions as described above.

As a result, the FID peak accumulated value was 200 and the volatilization required time was 45 minutes. Referring the values to Figs. 13 and 14, it could be estimated that in both cases the amount of dioxins in the fly ash was 0.025 ng-TEQ/g.

Further, for confirming the results, the amount of dioxins was measured as to the same sort of the fly ash by making in order the pretreatment with use of acid, the extraction treatment with use of organic solvent, the concentration treatment and an analysis with use of GC-MS.

As a result, it was found that the amount of dioxins in the fly ash was 0.03 ng-TEQ/g. From this result, it was confirmed that by combining the volatilization treatment and the measurement by use of the FID, dioxins could be precisely quantified.

It is possible to quantify the other harmful organic matters including PCN by preparing in advance graphs such as those as shown in Figs. 13 and 14. Similarly, it is possible to quantify all of the harmful organic matters such as dioxins and PCN.

## Claims

1. A treatment method of fly ash (4) containing harmful organic matters, the method comprising the steps of:
throwing the fly ash (4) into a cylindrical-vertical type heating container (5);
forming a fluidized layer (12) of the fly ash (4) by blowing heated gas (11) into the cylindrical-vertical heating container (5) from a gas blowing opening (14) provided at the bottom of the container (5), and by agitating the thrown fly ash (4) by an agitator that provides a plurality of rotary wings (7) inside the container (5);
heating the fluidized layer up to 350°C to 450°C with the heated gas (11) and a heater (8) provided around an outer periphery of the container (5);
separating and exhausting the heated fly ash (4) and gas (11); and
volatilizing the harmful organic matters contained in the fly ash (4).

2. The treatment method as defined in claim 1, wherein blowing of the heated gas (11) is carried out by blowing the heated gas (11) via a dispersing plate (9) which is located at the bottom part of the container (5).

3. The treatment method as defined in claim 1, wherein throwing of the fly ash (4) is carried out from the neighborhood of the surface of the fluidized layer (12) which has been already formed.

4. A treatment apparatus for performing a method according to any of claims 1 to 3, the apparatus comprising:
a cylindrical-vertical type heating container (5) into which the fly ash (4) is thrown;
a heater (8) provided around an outer periphery of the container (5);
an agitator that provides a plurality of rotary wings (7) inside the container (5);
a heated gas (11) blowing opening (14) provided at the bottom of the container (5);
an exhausting opening (13) for exhausting the heat treated fly ash (4);
a dust remover (15) for separating the heat treated fly ash (4) from the gas (11) to be exhausted after heat-treating, and
a noble metal catalyst reactor (28) for oxidizing and decomposing the harmful organic matters in the exhausted gas.

## Patentansprüche

1. Behandlungsverfahren von Flugasche (4), die schädliche organische Stoffe enthält, wobei das Verfahren die Schritte umfasst:
Werfen der Flugasche (4) in einen Heizbehälter (5) einer zylindrisch-vertikalen Art;
Ausbilden einer verwirbelten Schicht (12) der Flugasche (4) durch Einblasen von aufgeheiztem Gas (11) in den Heizbehälter (5) einer zylindrisch-vertikalen Art aus einer Gasblasöffnung (14), die an dem Boden des Behälters (5) vorgesehen ist, und durch das Mischen der geworfenen Flugasche (4) mittels eines Mischers, der eine Vielzahl von Drehflügeln (7) innerhalb des Behälters (5) bereitstellt;
Heizen der verwirbelten Schicht auf 350°C bis 450°C mit dem geheizten Gas (11) und einem Heizer (8), der um den äußeren Umfang des Behälters (5) angeordnet ist;
Trennen und Ausstoßen der geheizten Flugasche (4) und des Gases (11); und
Verflüchtigen der schädlichen organischen Stoffe, die in der Flugasche (4) enthalten sind.

2. Behandlungsverfahren nach Anspruch 1, bei dem das Einblasen des geheizten Gases (11) ausgeführt wird durch Einblasen des geheizten Gases (11) mittels einer Verteilerplatte (9), welche am Bodenteil des Behälters (5) angeordnet ist.

3. Behandlungsverfahren nach Anspruch 1, bei dem das Werfen der Flugasche (4) ausgeführt wird von der Umgebung der Oberfläche der schon ausgebildeten verwirbelten Schicht (12).

4. Behandlungsvorrichtung für das Durchführen eines Verfahrens nach einem der Ansprüche 1 bis 3, wobei die Vorrichtung umfasst:
einen Heizbehälter (5) einer zylindrisch-vertikalen Art, in den die Flugasche (4) geworfen wird;
einen Heizer (8), der um den äußeren Umfang des Behälters (5) angeordnet ist;
einen Mischer, der eine Vielzahl von Drehflügeln (7) innerhalb des Behälters (5) bereitstellt;
eine Blasöffnung (14) für geheiztes Gas (11), die am Boden des Behälters (5) vorgesehen ist;
eine Ausstoßöffnung (13) zum Ausstoßen der wärmebehandelten Flugasche (4);
einen Staubentferner (15) zum Trennen der wärmebehandelten Flugasche (4) von dem Gas (11), der nach der Wärmebehandlung ausgestoßen wird, und
einen Edelmetall Katalyst Reaktor (28) zum Oxidieren und Abbauen der schädlichen organischen Stoffe in dem ausgestoßenen Gas.

## Revendications

1. Procédé de traitement de cendres volantes (4) contenant des matières organiques nuisibles, le procédé comprenant les étapes consistant à :
projeter les cendres volantes (4) dans un conteneur chauffant de type cylindrique vertical (5) ;
former une couche fluidisée (12) des cendres volantes (4) en soufflant du gaz chauffé (11) dans le conteneur chauffant cylindrique vertical (5) à partir d'une ouverture de soufflage de gaz (14) disposée au fond du conteneur (5), et en agitant les cendres volantes projetées (4) par un agitateur qui définit une pluralité d'ailettes rotatives (7) à l'intérieur du conteneur (5) ;
chauffer la couche fluidisée jusqu'à 350 °C à 450 °C avec le gaz chauffé (11) et un dispositif de chauffage (8) disposé autour d'une périphérie extérieure du conteneur (5) ;
séparer et évacuer les cendres volantes chauffées (4) et le gaz (11) ; et
volatiliser les matières organiques nuisibles contenues dans les cendres volantes (4).

2. Procédé de traitement selon la revendication 1, dans lequel le soufflage du gaz chauffé (11) est effectué en soufflant le gaz chauffé (11) par le biais d'une plaque de dispersion (9) qui est située au niveau de la partie de fond du conteneur (5).

3. Procédé de traitement selon la revendication 1, dans lequel la projection des cendres volantes (4) est effectuée à partir du voisinage de la surface de la couche fluidisée (12) qui a déjà été formée.

4. Appareil de traitement pour effectuer un procédé selon l'une quelconque des revendications 1 à 3, l'appareil comprenant :
un conteneur chauffant de type cylindrique vertical (5) dans lequel les cendres volantes (4) sont projetées ;
un dispositif de chauffage (8) disposé autour d'une périphérie extérieure du conteneur (5) ;
un agitateur qui définit une pluralité d'ailettes rotatives (7) à l'intérieur du conteneur (5) ;
une ouverture de soufflage (14) de gaz chauffé (11) disposée au fond du conteneur (5) ;
une ouverture d'échappement (13) pour faire échapper les cendres volantes (4) traitées à la chaleur ;
un dispositif d'enlèvement de poussières (15) pour séparer les cendres volantes (4) traitées à la chaleur du gaz (11) à faire échapper après le traitement thermique, et
un réacteur catalyseur à métal noble (28) pour oxyder et décomposer les matières organiques nuisibles dans le gaz échappé.
